# FASCICULE DE BREVET EUROPEEN

(11) **EP 4 536 977 B1**
(45) Date de publication et mention de la délivrance du brevet: **18.02.2026**
(21) Numéro de dépôt: 23736158.9
(22) Date de dépôt: 07.06.2023
(51) Int. Cl.: F04D 29/54

(54) **ENSEMBLE DE PRODUCTION DE POUSSÉE NON CARÉNÉ COMPRENANT UN REDRESSEUR**
MANTELLOSE SCHUBERZEUGUNGSANORDNUNG MIT EINEM STRÖMUNGSBEGRADIGENDEN STATOR
UNDUCTED THRUST-GENERATING ASSEMBLY COMPRISING A FLOW-STRAIGHTENING STATOR

(30) Priorité: 08.06.2022 FR 2205479
(43) Date de publication de la demande: 16.04.2025
(73) Titulaire: SAFRAN AIRCRAFT ENGINES, 75015 Paris (FR)
(72) Inventeur: BELMON, Guillaume Claude Robert, 77550 MOISSY-CRAMAYEL (FR); TAMIZIER, Julien Michel, 77550 MOISSY-CRAMAYEL (FR); BINDER, Anthony, 77550 MOISSY-CRAMAYEL (FR)
(74) Mandataire: Regimbeau
(86) Numéro de dépôt international: PCT/FR2023/050804
(87) Numéro de publication internationale: WO 2023/237836

(56) Documents cités:
- FR-A1- 3 083 207
- US-A1- 2018 259 201
- US-A1- 2019 136 710

## Description

### DOMAINE TECHNIQUE

La présente demande concerne de manière générale le domaine des turbomachines, et plus particulièrement le redresseur d'un ensemble de production de poussée non caréné pour une turbomachine. La demande s'applique plus particulièrement, mais non limitativement, aux turbomachines présentant un fort taux de dilution (typiquement supérieur à 12, de préférence supérieur à 18).

### ETAT DE LA TECHNIQUE

Une turbomachine du type USF (acronyme anglais de Unducted Single Fan, pour soufflante unique non carénée) comprend, d'amont en aval dans le sens d'écoulement des gaz à travers la turbomachine, une hélice tournante et un redresseur.

De manière générale, une hélice dite « classique » monoétage de type turbopropulseur ainsi que les doublets d'hélices contrarotatives sont chargées en partie haute des aubes, en maximisant le travail de cette partie de l'aube pour augmenter la déviation du flux. Cela permet en effet de mettre à profit la triangulation de vitesse en tête d'aube, qui est favorable à la poussée motrice. Par ailleurs, cela permet de minimiser les pertes induites de l'aube, c'est-à-dire les pertes générées par la répartition radiale de la charge de l'aube, qui peuvent être matérialisées par un tourbillon en tête d'aube et de façon générale par une modification de la triangulation du flux d'air, ce qui a tendance à réduire la poussée motrice.

La Demanderesse s'est aperçue du fait que le chargement de l'hélice en tête d'aube avait pour effet de charger également le redresseur en tête d'aube. L'augmentation de la charge signifie que la déviation augmente, que la giration résiduelle en sortie d'hélice augmente également, et donc que le redresseur doit réaliser une forte déviation pour ré-axialiser le flux d'air. Cependant, la solidité d'un redresseur est plus faible dans cette zone de l'aube. Par solidité à un rayon donné du redresseur, on comprendra ici le rapport entre la corde de l'aube et la distance entre deux aubes adjacentes (la corde et la distance étant mesurées au niveau du rayon en question). Or, plus la solidité d'un redresseur est faible, moins le redresseur est capable de redresser le flux, ce qui implique une diminution des performances aérodynamiques, une augmentation du niveau de bruit d'un point de vue acoustique (en raison de l'interaction entre l'hélice et le redresseur en têtes d'aubes) et des contraintes mécaniques élevées dans le redresseur en tête d'aube.

Afin de supprimer le bruit en tête d'aubes non carénées, le document FR2938502 propose d'équiper les aubes de l'hélice d'ailettes de guidage. Toutefois, ce document porte sur une turbomachine comprenant des hélices contrarotatives, et non une hélice suivie d'un redresseur. De plus, la solution proposée a pour effet de dévier les tourbillons radialement à l'extérieur de l'aubage aval : par conséquent, l'application de cette solution à un ensemble de production de poussée comprenant un redresseur, statique, a pour effet de réduire la quantité de flux d'air redressée par le redresseur et donc les performances aérodynamiques de la turbomachine.

Les documents US2019/136710 A1 et FR 3083207 A1 montrent des redresseurs de l'art antérieure.

### EXPOSE DE L'INVENTION

Un but de la présente demande est de remédier aux inconvénients précités, en proposant un redresseur capable d'améliorer les performances aérodynamiques de la turbomachine et de réduire le bruit généré par l'ensemble de production de poussée, sans pour autant augmenter les contraintes mécaniques en tête d'aube du redresseur.

Il est à cet effet proposé, selon un premier aspect, un redresseur d'un ensemble de production de poussée non caréné pour une turbomachine comprenant une pluralité d'aubes présentant chacune :
- un sommet et une limite radialement interne correspondant à une intersection entre l'aube et un carter de la turbomachine ;
- un squelette correspondant à une ligne fictive s'étendant d'un bord d'attaque à un bord de fuite de l'aube, à équidistance entre un intrados et un extrados de l'aube ; et
- une déviation (δ) du profil, correspondant à une valeur absolue d'une différence entre une tangente au squelette au bord d'attaque et une tangente au squelette au bord de fuite de l'aube, comprise entre 20° et 45° au niveau de la limite radialement interne de l'aube et entre 10° et 40° au niveau du sommet de l'aube.

Dans une forme de réalisation, la valeur de déviation maximale est obtenue entre 0 % et 40 % de la hauteur de l'aube (la hauteur est comprise comme la différence entre le rayon maximal en sommet d'aube et le rayon minimal de l'intersection entre l'aube et le carter de la turbomachine).

Certaines caractéristiques préférées mais non limitatives du redresseur selon le premier aspect sont les suivantes, prises individuellement ou en combinaison :
- la déviation du profil de chaque aube au niveau de la limite radialement interne de l'aube est comprise entre 25° et 35° ;
- une déviation minimale du profil de chaque aube se situe à une distance de la limite radialement interne de l'aube comprise entre 40 % et 100 %, de préférence entre 40 % et 85 %, de la hauteur de l'aube ;
- la déviation du profil de chaque aube est décroissante de la limite radialement interne de l'aube vers le sommet de l'aube sur au moins 50 % de la hauteur de l'aube, de préférence sur au moins 70 % de la hauteur de l'aube, par exemple sur environ 80 % de la hauteur de l'aube ;
- la déviation du profil de chaque aube est décroissante de la limite radialement interne de l'aube en direction du sommet de l'aube jusqu'à une première zone de l'aube s'étendant à une distance de la limite radialement interne de l'aube comprise entre 45 % de la hauteur de l'aube et 85 % de la hauteur de l'aube, de préférence entre 70 % de la hauteur de l'aube et 85 % de la hauteur de l'aube ;
- la déviation du profil de chaque aube est croissante de la première zone de l'aube jusqu'au sommet de l'aube ;
- la déviation du profil de chaque aube est supérieure à 20° sur au moins une portion de l'aube s'étendant de la limite radialement interne de l'aube à une deuxième zone de l'aube s'étendant à une distance comprise entre 0 % et 40 % de la hauteur de l'aube ;
- la déviation du profil de chaque aube au niveau de la limite radialement interne de l'aube est strictement supérieure à la déviation du profil au niveau du sommet de l'aube ;
- une déviation maximale du profil de chaque aube se situe à une distance de la limite radialement interne de l'aube comprise entre 0 % et 40 % de la hauteur de l'aube ;
- la déviation du profil de chaque aube est inférieure à 25° sur une portion de l'aube s'étendant de la limite radialement interne à une distance comprise entre 40 % et 80 % de la hauteur de l'aube ;
- la déviation du profil de chaque aube au niveau du sommet de l'aube est comprise entre 10° et 25° ;
- la première zone de l'aube s'étend à une distance de la limite radialement interne de l'aube comprise entre 45 % de la hauteur de l'aube et 75 % de la hauteur de l'aube, de préférence entre 50 % de la hauteur de l'aube et 70 % de la hauteur de l'aube ;
- la déviation du profil de chaque aube est inférieure à 25° sur une portion de l'aube s'étendant d'une première distance comprise entre 10 % et 20 % de la hauteur de l'aube à une deuxième distance comprise entre 80 % et 100 % de la hauteur de l'aube ;
- la déviation du profil de chaque aube au niveau du sommet de l'aube est comprise entre 25° et 35° ;
- la déviation du profil de chaque aube est strictement supérieure à 20° sur toute la hauteur de l'aube ;
- la déviation du profil de chaque aube au niveau du sommet de l'aube est supérieure ou égale à la déviation du profil au niveau de la limite radialement interne de l'aube ;
- le redresseur comprend entre 8 et 12 aubes ; et/ou
- une longueur de la corde de chaque aube au niveau du sommet de l'aube est inférieure à 75 % d'une corde maximale de l'aube.

Selon un deuxième aspect, l'invention propose un ensemble de production de poussée non caréné pour une turbomachine comprenant une hélice mobile en rotation par rapport à un carter de la turbomachine et un redresseur monté fixe selon le premier aspect sur le carter et s'étendant en aval de l'hélice.

L'hélice peut comprendre entre dix et seize aubes mobiles. Le redresseur peut comprendre entre huit et quatorze aubes.

Selon un troisième aspect, il est proposé une turbomachine comprenant un carter et un ensemble de production de poussée non caréné conforme au deuxième aspect, l'hélice étant mobile en rotation par rapport au carter et le redresseur étant fixe en rotation par rapport au carter.

L'un au moins parmi l'hélice et le redresseur est à calage variable. De préférence, l'hélice et le redresseur sont à calage variable.

Selon un quatrième aspect, qui ne fait pas partie de l'invention revendiquée, il est proposé un aéronef comprenant une turbomachine conforme au troisième aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

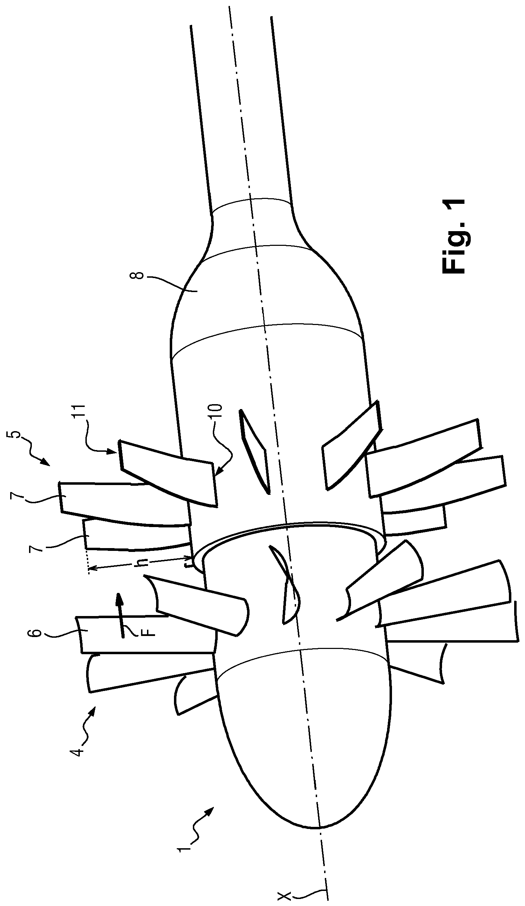

La figure 1 illustre de façon schématique un exemple de turbomachine du type USF conforme à un mode de réalisation de l'invention ;

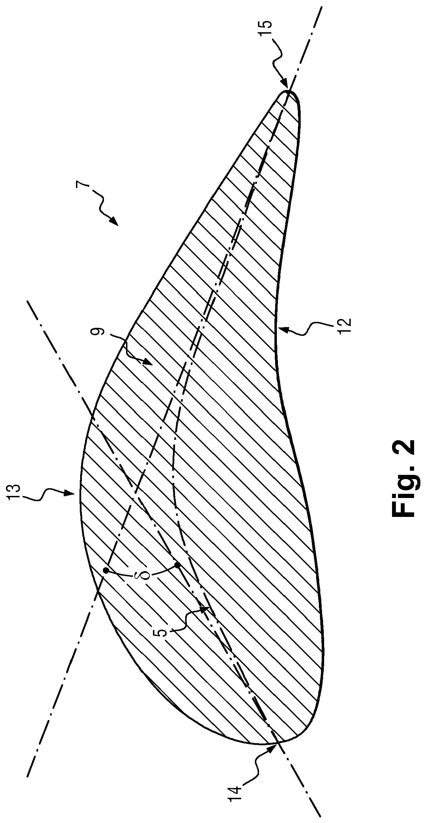

La figure 2 est une vue en coupe schématique (dans un plan normal à un axe radial à l'axe de la turbomachine) d'un exemple d'aube de redresseur conforme à un exemple de réalisation de l'invention ;
La figure 3 représente la déviation (δ, en degrés) d'exemples de réalisation d'une aube de redresseur selon l'invention, en fonction de la distance (% h) depuis la limite radialement interne de cette aube ; et

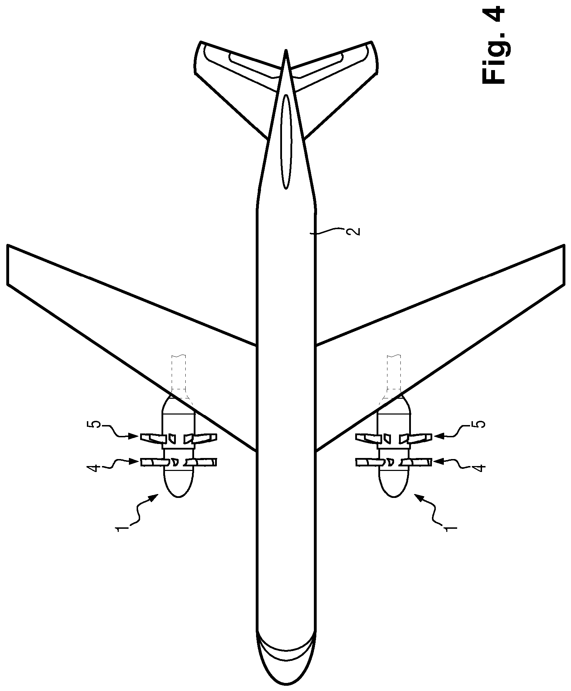

La figure 4 représente schématiquement un aéronef comprenant deux turbomachines conformes à un mode de réalisation de l'invention.

Sur l'ensemble des figures, les éléments similaires portent des références identiques.

### DESCRIPTION DETAILLEE DE L'INVENTION

Une turbomachine 1, notamment d'aéronef 2, présente une direction principale s'étendant selon un axe X longitudinal et comporte typiquement, d'amont en aval dans le sens de l'écoulement des gaz, un ensemble de production de poussée 3 et un générateur de gaz. Le générateur de gaz peut comprendre une section de compression pouvant comprendre un compresseur basse pression et un compresseur haute pression, une chambre de combustion, une section de turbine pouvant comprendre une turbine haute pression et une turbine basse pression, et un carter d'échappement.

L'ensemble de production de poussée 3 est de préférence non caréné, c'est-à-dire qu'il n'est pas entouré par une nacelle externe ou un carénage de la turbomachine 1. Il comprend une hélice 4 (rotor) montée mobile en rotation autour de l'axe X et un redresseur 5 (stator), coaxial avec l'hélice 4 et monté à la sortie de l'hélice 4, immédiatement en aval de celle-ci. Dans une forme de réalisation, l'hélice 4 est à calage variable et comprend un mécanisme de changement de pas configuré pour faire pivoter chaque aube de l'hélice 4 autour d'un axe de pivotement respectif, qui est radial à l'axe X de rotation de l'hélice 4.

Le redresseur 5 a pour fonction de redresser axialement le flux d'air F qui est mis en rotation par l'hélice 4. En effet, l'hélice 4 génère une giration de l'écoulement en son aval, où la giration est la composante de vitesse tangentielle de l'écoulement (dans un repère cylindrique dont l'axe X principal correspond à l'axe X moteur). Cette composante est nulle en amont de l'hélice 4 et apparaît en raison de l'entrainement en rotation de l'écoulement par l'hélice 4. Le redresseur 5 (statique) a alors pour fonction d'annuler cette composante et de la rediriger dans la direction axiale, puisque toute composante de vitesse tangentielle non nulle a pour effet de réduire la poussée générée par le moteur et à augmenter ses pertes.

L'hélice 4 peut comprendre entre dix et seize aubes 6. Le redresseur 5 peut comprendre entre huit et quatorze aubes 7. Les aubes 7 du redresseur 5 et de l'hélice 4 peuvent être réalisées dans tout matériau adapté, par exemple en métal ou dans un matériau composite comprenant un renfort fibreux densifié par une matrice, typiquement une résine polymère.

Dans la présente demande, la direction axiale correspond à la direction de l'axe X et une direction radiale est une direction perpendiculaire à cet axe X et passant par lui. Par ailleurs, la direction circonférentielle correspond à une direction perpendiculaire à l'axe X et ne passant pas par lui. Sauf précision contraire, interne (respectivement, intérieur) et externe (respectivement, extérieur), respectivement, sont utilisés en référence à une direction radiale de sorte que la partie ou la face interne d'un élément est plus proche de l'axe X que la partie ou la face externe du même élément.

Le redresseur 5 comprend des aubes 7 de redresseur 5, montées fixes sur un carter externe 8 de la turbomachine 1, typiquement le carter qui entoure le générateur. Dans le cas d'un ensemble propulsif 3 non caréné, le carter externe 8 correspond à la nacelle qui entoure le générateur. Chaque aube 7 présente à cet effet un pied monté dans le carter externe 8 et une pale 9 à profil aérodynamique propre à être placée dans un flux d'air F lorsque la turbomachine 1 est en fonctionnement afin de redresser le flux d'air F en sortie d'hélice 4.

L'aube 7 présente une limite radialement interne 10, qui correspond à l'intersection entre la nacelle 8 et l'aube 7, et un sommet 11 au niveau de son extrémité libre et qui correspond à une limite radialement externe de l'aube 7. La limite radialement externe de l'aube 7 délimite donc radialement l'écoulement traversant le redresseur 5.

L'aube 7 présente en outre un intrados 12, un extrados 13, un bord d'attaque 14 et un bord de fuite 15. De manière connue en soi, le bord d'attaque 14 est configuré pour s'étendre en regard de l'écoulement des gaz entrant dans le redresseur 5. Il correspond, en fonctionnement normal hors du mode inversion de poussée, à la partie antérieure d'un profil aérodynamique qui fait face au flux d'air F et qui divise l'écoulement d'air en un écoulement d'intrados 12 et en un écoulement extrados 13. Le bord de fuite 15 quant à lui correspond à la partie postérieure du profil aérodynamique, où se rejoignent les écoulements intrados et extrados.

Afin d'améliorer les performances aérodynamiques de la turbomachine 1 et de réduire le bruit généré par l'ensemble de production de poussée 3, il convient de décharger le sommet 11 des aubes 7. En effet, la reprise des efforts est ainsi maximisée dans la zone où le redresseur 5 a une solidité plus élevée, typiquement au niveau de la limite radialement interne 10 de l'aube 7. Le sommet 11 des aubes 7 étant moins chargé, cela permet en outre de réduire le bruit généré par les tourbillons en tête d'aube 7, le bruit d'interaction de sillage hélice 4-redresseur 5, ainsi que le bruit propre de l'hélice 4 et du redresseur 5 en tête d'aube 7. Les performances aéro-acoustiques du redresseur 5 sont donc augmentées tout en améliorant la répartition des contraintes mécaniques dans les aubes 7 en réduisant les efforts aérodynamiques en tête d'aube.

Plusieurs paramètres structurels des aubes 7 du redresseur 5 peuvent être prise en compte à cet égard, parmi lesquels un dièdre et une déviation δ du profil de chaque aube 7. La prise en compte du dièdre est décrite plus en détails dans le document FR3124832, au nom de la Demanderesse. La déviation δ du profil de l'aube 7 correspond à une valeur absolue d'une différence entre une tangente au squelette 16 au bord d'attaque 14 et une tangente 16 au squelette au bord de fuite 15 de l'aube 7. Par squelette 16, on comprendra ici la ligne fictive s'étendant du bord d'attaque 14 au bord de fuite 15 de l'aube 7, à équidistance entre un intrados 12 et un extrados 13 de l'aube 7.

Dans la turbomachine 1, chaque aube 7 du redresseur 5 est conformée de sorte qu'une déviation δ du profil de l'aube 7 est comprise entre 20° et 45°, de préférence entre 25° et 35°, au niveau de la limite radialement interne 10 de l'aube 7 et entre 10° et 40° au niveau du sommet 11 de l'aube 7. Cette configuration des aubes 7 permet, notamment, de maximiser la déviation du flux d'air F traversant le redresseur 5 en bas de pale (c'est-à-dire dans la zone s'étendant à proximité de la limite radialement interne 10 des aubes 7), plutôt qu'au niveau du sommet 11, ce qui décharge le sommet 11 de l'aube 7

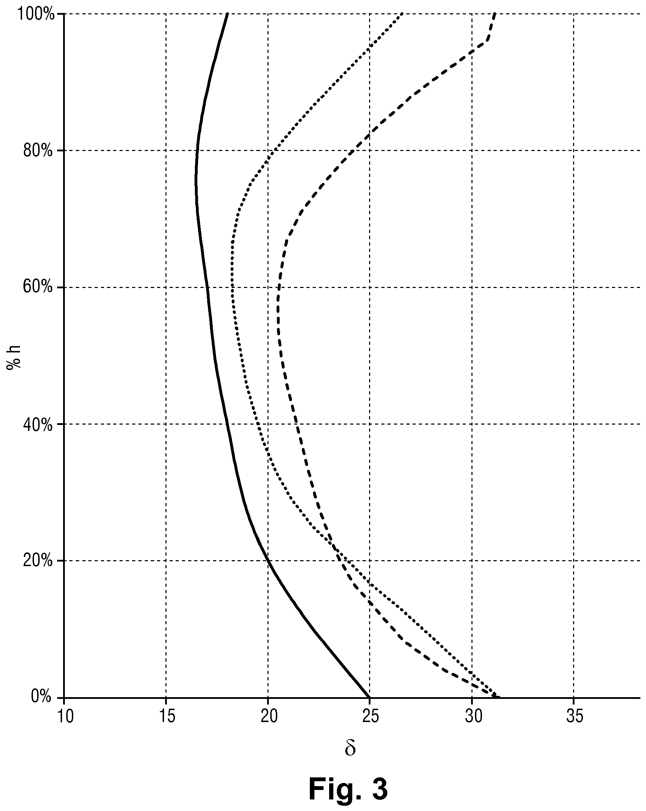

Plusieurs formes de profil de l'aube 7 peuvent être envisagées, comme illustré sur la figure 3. Il est à noter que, pour des raisons de simplicité de fabrication, chaque aube 7 du redresseur 5 présente, de préférence, sensiblement la même forme de profil (aux tolérances de fabrication près). Ceci n'est toutefois pas limitatif puisque les aubes 7 peuvent présenter des profils différents au sein d'un même redresseur 5.

Quelle que soit la forme envisagée, une déviation minimale δₘᵢₙ de l'aube 7 se situe avantageusement à une distance (% h sur la figure 3) de la limite radialement interne 10 de l'aube 7 comprise entre 40 % et 100 % de la hauteur h de l'aube 7, soit dans la partie de l'aube 7 qui est adjacente au sommet 11. Par hauteur h de l'aube 7, on comprendra ici la distance (mesurée suivant un axe radial de l'aube 7 passant par le sommet 11) entre la limite radialement interne 10 et le sommet 11 de l'aube 7. Par exemple, la déviation minimale δₘᵢₙ du profil peut se situer à une distance égale à environ 80 % (à 5 % près) de la hauteur h de l'aube 7 (courbe en trait plein sur la figure 3). Ceci n'est toutefois pas limitatif puisqu'une déviation minimale δₘᵢₙ de l'aube 7 peut également se situer à une distance de la limite radialement interne 10 de l'aube 7 comprise entre 40 % et 85 % de la hauteur h de l'aube 7, soit dans une partie médiane de l'aube 7. Par exemple, la déviation minimale δₘᵢₙ du profil peut se situer à une distance égale à environ 65 % (à 5 % près) de la hauteur h de l'aube 7 (courbe en pointillés sur la figure 3) ou à une distance égale à environ 55 % (à 5 % près) de la hauteur h de l'aube 7 (courbe en trait discontinu sur la figure 3).

Par ailleurs, la déviation δ du profil de chaque aube 7 est avantageusement décroissante de la limite radialement interne 10 de l'aube 7 vers le sommet 11 de l'aube 7 sur au moins 50% de l'aube 7, de préférence sur au moins 70% de la hauteur h de l'aube 7, par exemple sur environ 80 % de la hauteur h de l'aube 7. De préférence, elle est décroissante de la limite radialement interne 10 de l'aube 7 en direction du sommet 11 de l'aube 7 jusqu'à une zone de l'aube 7 s'étendant à une distance de la limite radialement interne 10 de l'aube 7 comprise entre 45% de la hauteur h de l'aube 7 et 85% de la hauteur h de l'aube 7, par exemple comprise entre 70% de la hauteur h de l'aube 7 et 85% de la hauteur h de l'aube 7. Dans certaines formes de réalisation (courbes en pointillés et en trait discontinue sur la figure 3), elle est décroissante de la limite radialement interne 10 de l'aube 7 en direction du sommet 11 de l'aube 7 jusqu'à une zone de l'aube 7 s'étendant à une distance de la limite radialement interne 10 de l'aube 7 comprise entre 45% de la hauteur h de l'aube 7 et 75% de la hauteur h de l'aube 7, par exemple comprise entre 50% de la hauteur h de l'aube 7 et 20% de la hauteur h de l'aube 7. Le cas échéant, elle peut ensuite devenir croissante jusqu'au sommet 11 de l'aube 7. Ainsi, la déviation δ est décroissante sur une partie, voire la majorité, de la hauteur h de l'aube 7, depuis sa limite radialement interne 10. Elle devient ensuite croissante.

En outre, la déviation δ du profil de chaque aube 7 est avantageusement supérieure à 15°, de préférence supérieure à 20°, au moins en bas de pale 9, par exemple sur une portion de l'aube 7 s'étendant de la limite radialement interne 10 de l'aube 7 à une zone de l'aube 7 s'étendant à une distance comprise entre 0 % et 40 % de la hauteur h de l'aube 7. Dans certaines formes de réalisation, la déviation δ du profil de chaque aube 7 est également supérieure à 20° en haut de pale 9, par exemple sur une portion de l'aube s'étendant d'une zone de l'aube 7 s'étendant à une distance comprise entre 70 % et 80 % de la hauteur h de l'aube 7 au sommet 11 de l'aube 7 (courbe en pointillés sur la figure 3). Le cas échéant, la déviation δ du profil de chaque aube 7 peut même être strictement supérieure à 20° sur toute la hauteur h de l'aube 7 (courbe en trait discontinu sur la figure 3).

Dans certaines formes de réalisation, la déviation δ du profil de chaque aube 7 au niveau de la limite radialement interne 10 de l'aube 7 est strictement supérieure à la déviation δ du profil au niveau du sommet 11 de l'aube 7 afin de maximiser la déviation du flux d'air F en bas de pale 9 (courbes en trait plein et en pointillés sur la figure 3). Le cas échéant, le dièdre de l'aube 7 est avantageusement incliné vers l'intrados 12. En outre, la déviation plus faible en tête permet d'obtenir un redresseur 5 dont les aubes 7 présentent une corde en tête (c'est-à-dire au niveau du sommet 11 d'aube) plus petite que la corde en pied (c'est à dire au niveau de la limite radialement interne 10), ce qui permet encore de réduire les pertes. Par ailleurs, une longueur de la corde en tête de chaque aube 7 est de préférence inférieure à 75% d'une corde maximale de l'aube 7 sur la hauteur de l'aube 7. Ceci n'est toutefois pas limitatif, puisque la déviation δ du profil de chaque aube 7 au niveau du sommet 11 de l'aube 7 peut alternativement être supérieure ou égale à la déviation δ du profil au niveau de la limite radialement interne 10 de l'aube 7. Le cas échéant, le dièdre est avantageusement neutre, voire incliné vers l'extrados 13.

En outre, la déviation maximale δₘₐₓ du profil de chaque aube 7 se situe avantageusement à une distance de la limite radialement interne 10 de l'aube 7 comprise entre 0 % et 40 % de la hauteur h de l'aube 7. Par exemple, la déviation maximale δₘₐₓ du profil peut se situer au niveau de la limite radialement interne 10 (courbes en trait plein et en pointillés sur la figure 3). Dans certains cas, la déviation maximale δₘₐₓ du profil se situe dans le premier tiers de la hauteur h de l'aube 7 et la déviation minimale δₘᵢₙ dans le dernier tiers (courbe en trait plein sur la figure 3).

Par ailleurs, la déviation δ du profil de chaque aube 7 est avantageusement inférieure à 25° en haut de pale 9, par exemple sur une portion de l'aube 7 s'étendant de la limite radialement interne 10 à une distance comprise entre 40 % et 80 % de la hauteur h de l'aube 7 (courbes en trait plein et en pointillés sur la figure 3). Alternativement, la déviation δ du profil de chaque aube 7 peut être inférieure à 25° sur une portion de l'aube 7 s'étendant d'une première distance comprise entre 10 % et 20 % de la hauteur de l'aube 7 à une deuxième distance comprise entre 80 % et 100 % de la hauteur de l'aube 7 (courbes en pointillés et train discontinu sur la figure 3).

La courbe en trait plein illustrée sur la figure 3 correspond à une déviation δ du profil de l'aube 7 dans laquelle la déviation maximale δₘₐₓ est de l'ordre de 25° et se situe au niveau de la limite radialement interne 10 de l'aube 7. En outre, la déviation δ décroit de la limite radialement interne 10 de l'aube 7 sur une distance égale à 75%-80% de la hauteur h de l'aube 7, où elle atteint un minimum de l'ordre de 17°. La décroissance de la déviation δ est continue sur toute la hauteur h de l'aube 7 jusqu'à atteindre son minimum δₘᵢₙ. Elle augmente ensuite jusqu'au sommet 11 d'aube 7, où elle est comprise entre 10° et 25°, de préférence sensiblement égale à 18°.

La courbe en pointillés illustrée sur la figure 3 correspond, quant à elle, à une déviation δ du profil de l'aube 7 dans laquelle la déviation maximale δₘₐₓ est supérieure à 30°, et de préférence sensiblement égale à 32°, et se situe au niveau de la limite radialement interne 10 de l'aube 7. En outre, la déviation δ décroit de la limite radialement interne 10 de l'aube 7 sur une distance égale à 60%-65% de la hauteur h de l'aube 7, où elle atteint un minimum de l'ordre de 18°. La décroissance de la déviation δ est continue sur toute la hauteur h de l'aube 7 jusqu'à atteindre son minimum δₘᵢₙ. Elle augmente ensuite jusqu'au sommet 11 d'aube 7, où elle est comprise entre 25° et 30°, de préférence sensiblement égale à 27°.

Quant à la courbe en trait discontinu illustrée sur la figure 3, elle correspond à une déviation δ du profil de l'aube 7 dans laquelle la déviation maximale δₘₐₓ est supérieure à 30°, et de préférence sensiblement égale à 32°, et se situe au niveau de la limite radialement interne 10 de l'aube 7 mais au aussi au sommet 11 de l'aube 7. En outre, la déviation δ décroit de la limite radialement interne 10 de l'aube 7 sur une distance égale à 55%-60% de la hauteur h de l'aube 7, où elle atteint un minimum de l'ordre de 21°. La décroissance de la déviation δ est continue sur toute la hauteur h de l'aube 7 jusqu'à atteindre son minimum δₘᵢₙ. Elle augmente ensuite jusqu'au sommet 11 d'aube 7.

On notera que la hauteur h des aubes 7 du redresseur 5 peut être sensiblement égale à une hauteur des aubes 6 de l'hélice 4, où la hauteur des aubes 6 de l'hélice 4 correspond à la distance (mesurée suivant l'axe de pivotement de l'aube 6 ou le cas échéant un axe radial à l'axe X passant par son sommet) entre une limite radialement interne 10 de l'aube 6 et le sommet de l'aube 6.

En variante, la hauteur h des aubes 7 du redresseur 5 peut être inférieure à la hauteur des aubes 6 de l'hélice 4.

## Revendications

1. Redresseur (5) d'un ensemble de production de poussée (3) non caréné pour une turbomachine (1) comprenant une pluralité d'aubes (7) présentant chacune :
- un sommet (11) et une limite radialement interne (10) correspondant à une intersection entre l'aube (7) et un carter (8) de la turbomachine (1) ;
- un squelette (16) correspondant à une ligne fictive s'étendant d'un bord d'attaque (14) à un bord de fuite (15) de l'aube (7), à équidistance entre un intrados (12) et un extrados (13) de l'aube (7) ; et
- une déviation (δ) du profil, correspondant à une valeur absolue d'une différence entre une tangente au squelette (16) au bord d'attaque (14) et une tangente au squelette (16) au bord de fuite (15) de l'aube (7), comprise entre 20° et 45° au niveau de la limite radialement interne (10) de l'aube (7) et entre 10° et 40° au niveau du sommet (11) de l'aube (7).

2. Redresseur (5) selon la revendication 1, dans lequel la déviation (δ) du profil de chaque aube (7) au niveau de la limite radialement interne (10) de l'aube (7) est comprise entre 25° et 35°.

3. Redresseur (5) selon l'une des revendications 1 et 2, dans lequel une déviation minimale (δₘᵢₙ) du profil de chaque aube (7) se situe à une distance de la limite radialement interne (10) de l'aube (7) comprise entre 40 % et 100 %, de préférence entre 40 % et 85 %, de la hauteur de l'aube (7).

4. Redresseur (5) selon l'une des revendications 1 à 3, dans lequel la déviation (δ) du profil de chaque aube (7) est décroissante de la limite radialement interne (10) de l'aube (7) vers le sommet (11) de l'aube (7) sur au moins 50 % de la hauteur de l'aube (7), de préférence sur au moins 70 % de la hauteur de l'aube (7), par exemple sur environ 80 % de la hauteur de l'aube (7), la déviation (δ) du profil de chaque aube (7) pouvant être décroissante de la limite radialement interne (10) de l'aube (7) en direction du sommet (11) de l'aube (7) jusqu'à une première zone de l'aube (7) s'étendant à une distance de la limite radialement interne (10) de l'aube (7) comprise entre 45 % de la hauteur de l'aube (7) et 85 % de la hauteur de l'aube (7), de préférence entre 70 % de la hauteur de l'aube (7) et 85 % de la hauteur de l'aube (7),la déviation (δ) du profil de chaque aube (7) pouvant optionnellement être croissante de la première zone de l'aube (7) jusqu'au sommet (11) de l'aube (7), la première zone de l'aube (7) pouvant s'étendre à une distance de la limite radialement interne (10) de l'aube (7) comprise entre 45 % de la hauteur de l'aube (7) et 75 % de la hauteur de l'aube (7), de préférence entre 50 % de la hauteur de l'aube (7) et 70 % de la hauteur de l'aube (7).

5. Redresseur (5) selon l'une des revendications 1 à 4, dans lequel la déviation (δ) du profil de chaque aube (7) est supérieure à 20° sur au moins une portion de l'aube (7) s'étendant de la limite radialement interne (10) de l'aube (7) à une deuxième zone de l'aube (7) s'étendant à une distance comprise entre 0 % et 40 % de la hauteur de l'aube (7).

6. Redresseur (5) selon l'une des revendications 1 à 5, dans lequel la déviation (δ) du profil de chaque aube (7) au niveau de la limite radialement interne (10) de l'aube (7) est strictement supérieure à la déviation (δ) du profil au niveau du sommet (11) de l'aube (7).

7. Redresseur (5) selon l'une des revendications 1 à 6, dans lequel une déviation maximale (δₘₐₓ) du profil de chaque aube (7) se situe à une distance de la limite radialement interne (10) de l'aube (7) comprise entre 0 % et 40 % de la hauteur de l'aube (7).

8. Redresseur (5) selon l'une des revendications 1 à 7, dans lequel la déviation (δ) du profil de chaque aube (7) est inférieure à 25° sur une portion de l'aube (7) s'étendant de la limite radialement interne (10) à une distance comprise entre 40 % et 80 % de la hauteur de l'aube (7).

9. Redresseur (5) selon l'une des revendications 1 à 8, dans lequel la déviation (δ) du profil de chaque aube (7) au niveau du sommet (11) de l'aube (7) est comprise entre 10° et 25°.

10. Redresseur (5) selon l'une des revendications 1 à 9, dans lequel la déviation (δ) du profil de chaque aube (7) est inférieure à 25° sur une portion de l'aube (7) s'étendant d'une première distance comprise entre 10 % et 20 % de la hauteur de l'aube (7) à une deuxième distance comprise entre 80 % et 100 % de la hauteur de l'aube (7).

11. Redresseur (5) selon l'une des revendications 1 à 5 et 10, dans lequel la déviation (δ) du profil de chaque aube (7) au niveau du sommet (11) de l'aube (7) est comprise entre 25° et 35°, la déviation (δ) du profil de chaque aube (7) pouvant être strictement supérieure à 20° sur toute la hauteur de l'aube (7).

12. **Redresseur** (5) selon l'une des revendications 1 à 5 et 11, dans lequel la déviation (δ) du profil de chaque aube (7) au niveau du sommet (11) de l'aube (7) est supérieure ou égale à la déviation (δ) du profil au niveau de la limite radialement interne (10) de l'aube (7).

13. Redresseur (5) selon l'une des revendications 1 à 12, dans lequel une longueur de la corde de chaque aube (7) au niveau du sommet (11) de l'aube (7) est inférieure à 75 % d'une corde maximale de l'aube (7).

14. Ensemble de production de poussée (3) non caréné pour une turbomachine (1) comprenant une hélice (4) mobile en rotation par rapport à un carter (8) de la turbomachine (1) et un redresseur (5) selon l'une des revendications 1 à 13 monté fixe sur le carter (8) et s'étendant en aval de l'hélice (4), le redresseur pouvant comprendre entre 8 et 12 aubes (7) et l'hélice (4) pouvant comprendre entre dix et seize aubes mobiles (6).

15. Turbomachine (1) comprenant un carter (8) et un ensemble de production de poussée (3) non caréné selon la revendication 14, l'hélice (4) étant mobile en rotation par rapport au carter (8) et le redresseur (5) étant fixe en rotation par rapport au carter (8), en aval de l'hélice (4), au moins l'un parmi l'hélice (4) et le redresseur (5) pouvant être à calage variable.

## Patentansprüche

1. Strömungsbegradiger (5) einer mantellosen Schuberzeugungsanordnung (3) für eine Turbomaschine (1), die eine Vielzahl von Schaufeln (7) umfasst, die jeweils aufweisen:
- eine Spitze (11) und eine radial innere Begrenzung (10), die einem Schnittpunkt zwischen der Schaufel (7) und einem Gehäuse (8) der Turbomaschine entspricht (1);
- ein Gerüst (16), das einer fiktiven Linie entspricht, die sich von einer Vorderkante (14) zu einer Hinterkante (15) der Schaufel (7) in gleichem Abstand zwischen einer Unterseite (12) und einer Oberseite (13) der Schaufel (7) erstreckt; und
- eine Profilabweichung (δ), die einem absoluten Wert einer Differenz zwischen einer Tangente am Gerüst (16) an der Vorderkante (14) und einer Tangente am Gerüst (16) an der Hinterkante (15) der Schaufel (7) zwischen 20° und 45° im Bereich der radial inneren Begrenzung (10) der Schaufel (7) und zwischen 10° und 40° im Bereich der Spitze (11) der Schaufel (7) entspricht.

2. Strömungsbegradiger (5) nach Anspruch 1, wobei die Profilabweichung (δ) jeder Schaufel (7) im Bereich der radial inneren Begrenzung (10) der Schaufel (7) zwischen 25° und 35° liegt.

3. Strömungsbegradiger (5) nach einem der Ansprüche 1 und 2, wobei sich eine minimale Profilabweichung (δₘᵢₙ) jeder Schaufel (7) in einem Abstand von der radial inneren Begrenzung (10) der Schaufel (7) zwischen 40 % und 100 %, vorzugsweise zwischen 40 % und 85 % der Höhe der Schaufel (7) befindet.

4. Strömungsbegradiger (5) nach einem der Ansprüche 1 bis 3, wobei die Profilabweichung (δ) jeder Schaufel (7) von der radial inneren Begrenzung (10) der Schaufel (7) zur Spitze (11) der Schaufel (7) über mindestens 50 % der Höhe der Schaufel (7), vorzugsweise über mindestens 70 % der Höhe der Schaufel (7), beispielsweise über etwa 80 % der Höhe der Schaufel (7), abnimmt, wobei die Profilabweichung (δ) jeder Schaufel (7) von der radial inneren Begrenzung (10) der Schaufel (7) in Richtung der Spitze (11) der Schaufel (7) bis zu einem ersten Bereich der Schaufel (7), der sich in einem Abstand von der radial inneren Begrenzung (10) der Schaufel (7) zwischen 45 % der Höhe der Schaufel (7) und 85 % der Höhe der Schaufel (7), vorzugsweise zwischen 70 % der Höhe der Schaufel (7) und 85 % der Höhe der Schaufel (7) erstreckt, abnehmend sein kann, wobei die Profilabweichung (δ) jeder Schaufel (7) optional vom ersten Bereich der Schaufel (7) bis zur Spitze (11) der Schaufel (7) zunehmend sein kann, wobei sich der erste Bereich der Schaufel (7) in einem Abstand von der radial inneren Begrenzung (10) der Schaufel (7) zwischen 45 % der Höhe der Schaufel (7) und 75 % der Höhe der Schaufel (7), vorzugsweise zwischen 50 % der Höhe der Schaufel (7) und 70 % der Höhe der Schaufel (7) erstrecken kann.

5. Strömungsbegradiger nach einem der Ansprüche 1 bis 4, wobei die Profilabweichung (δ) jeder Schaufel (7) größer als 20° auf mindestens einem Abschnitt der Schaufel (7) ist, der sich von der radial inneren Begrenzung (10) der Schaufel (7) zu einem zweiten Bereich der Schaufel (7) erstreckt, der sich in einem Abstand zwischen 0 % und 40 % der Höhe der Schaufel (7) erstreckt.

6. Strömungsbegradiger (5) nach einem der Ansprüche 1 bis 5, wobei die Profilabweichung (δ) jeder Schaufel (7) im Bereich der radial inneren Begrenzung (10) der Schaufel (7) strikt größer ist als die Profilabweichung (δ) im Bereich der Spitze (11) der Schaufel (7).

7. Strömungsbegradiger (5) nach einem der Ansprüche 1 bis 6, wobei sich eine maximale Profilabweichung (δₘₐₓ) jeder Schaufel (7) in einem Abstand von der radial inneren Begrenzung (10) der Schaufel (7) zwischen 0 % und 40 % der Höhe der Schaufel (7) befindet.

8. Strömungsbegradiger (5) nach einem der Ansprüche 1 bis 7, wobei die Profilabweichung (δ) jeder Schaufel (7) kleiner als 25° auf einem Abschnitt der Schaufel (7) ist, der sich von der radial inneren Begrenzung (10) in einem Abstand zwischen 40 % und 80 % der Höhe der Schaufel (7) erstreckt.

9. Strömungsbegradiger (5) nach einem der Ansprüche 1 bis 8, wobei die Profilabweichung (δ) jeder Schaufel (7) im Bereich der Spitze (11) der Schaufel (7) zwischen 10° und 25° liegt.

10. Strömungsbegradiger (5) nach einem der Ansprüche 1 bis 9, wobei die Profilabweichung (δ) jeder Schaufel (7) kleiner als 25° auf einem Abschnitt der Schaufel (7) ist, der sich von einem ersten Abstand zwischen 10 % und 20 % der Höhe der Schaufel (7) bis zu einem zweiten Abstand zwischen 80 % und 100 % der Höhe der Schaufel (7) erstreckt.

11. Strömungsbegradiger (5) nach einem der Ansprüche 1 bis 5 und 10, wobei die Profilabweichung (δ) jeder Schaufel (7) im Bereich der Spitze (11) der Schaufel (7) zwischen 25° und 35° liegt, wobei die Profilabweichung (δ) jeder Schaufel (7) über die gesamte Höhe der Schaufel (7) strikt größer als 20° sein kann.

12. Strömungsbegradiger (5) nach einem der Ansprüche 1 bis 5 und 11, wobei die Profilabweichung (δ) jeder Schaufel (7) im Bereich der Spitze (11) der Schaufel (7) größer oder gleich der Profilabweichung (δ) im Bereich der radial inneren Begrenzung (10) der Schaufel (7) ist.

13. Strömungsbegradiger (5) nach einem der Ansprüche 1 bis 12, wobei eine Sehnenlänge jeder Schaufel (7) im Bereich der Spitze (11) der Schaufel (7) kleiner als 75 % einer maximalen Sehne der Schaufel (7) ist.

14. Mantellose Schuberzeugungsanordnung (3) für eine Turbomaschine (1), umfassend einen Luftschraube (4), die relativ zu einem Gehäuse (8) der Turbomaschine (1) rotationsbeweglich ist, und einen Strömungsbegradiger (5) nach einem der Ansprüche 1 bis 13, der fest am Gehäuse (8) angebracht ist und sich stromabwärts der Luftschraube (4) erstreckt, wobei der Strömungsbegradiger zwischen 8 und 12 Schaufeln (7) umfassen kann und die Luftschraube (4) zwischen zehn und sechzehn bewegliche Schaufeln (6) umfassen kann.

15. Turbomaschine (1), umfassend ein Gehäuse (8) und eine mantellose Schuberzeugungsanordnung (3) nach Anspruch 14, wobei die Luftschraube (4) relativ zum Gehäuse (8) rotationsbeweglich ist und der Strömungsbegradiger (5) stromabwärts von der Luftschraube (4) relativ zum Gehäuse (8) rotationsfest ist, wobei mindestens entweder die Luftschraube (4) oder der Strömungsbegradiger (5) variabel verstellbar ist.

## Claims

1. Outer guide vanes (5) of an unducted thrust-generating assembly (3) for a turbine engine (1) comprising a plurality of vanes (7) each having:
- a tip (11) and a radially inner boundary (10) corresponding to an intersection between the vane (7) and a casing (8) of the turbine engine (1);
- a skeleton (16) corresponding to an imaginary line extending from a leading edge (14) to a trailing edge (15) of the vane (7), equidistant between a pressure surface (12) and a suction surface (13) of the vane (7); and
- a deviation (δ) of the profile, corresponding to an absolute value of a difference between a tangent to the skeleton (16) at the leading edge (14) and a tangent to the skeleton (16) at the trailing edge (15) of the vane (7), of between 20° and 45° at the radially inner boundary (10) of the vane (7) and between 10° and 40° at the tip (11) of the vane (7).

2. The outer guide vanes (5) according to claim 1, wherein the deviation (δ) of the profile of each vane (7) at the radially inner boundary (10) of the vane (7) is of between 25° and 35°.

3. The outer guide vanes (5) according to one of claims 1 and 2, wherein a minimum deviation (δₘᵢₙ) of the profile of each vane (7) is located at a distance from the radially inner boundary (10) of the vane (7) of between 40% and 100%, preferably between 40% and 85%, of the height of the vane (7).

4. The outer guide vanes (5) according to one of claims 1 to 3, wherein the deviation (δ) of the profile of each vane (7) decreases from the radially inner boundary (10) of the vane (7) towards the tip (11) of the vane (7) over at least 50% of the height of the vane (7), preferably over at least 70% of the height of the vane (7), for example over approximately 80% of the height of the vane (7), wherein the deviation (δ) of the profile of each vane (7) can decrease from the radially inner boundary (10) of the vane (7) towards the tip (11) of the vane (7) to a first zone of the vane (7) extending at a distance from the radially inner boundary (10) of the vane (7) of between 45% of the height of the vane (7) and 85% of the height of the vane (7), preferably between 70% of the height of the vane (7) and 85% of the height of the vane (7), wherein the deviation (δ) of the profile of each vane (7) may optionally increase from the first zone of the vane (7) to the tip (11) of the vane (7), wherein the first zone of the vane (7) can extend at a distance from the radially inner boundary (10) of the vane (7) of between 45% of the height of the vane (7) and 75% of the height of the vane (7), preferably between 50% of the height of the vane (7) and 70% of the height of the vane (7).

5. The outer guide vanes (5) according to one of claims 1 to 4, wherein the deviation (δ) of the profile of each vane (7) is greater than 20° over at least a portion of the vane (7) extending from the radially inner boundary (10) of the vane (7) to a second zone of the vane (7) extending at a distance of between 0% and 40% of the height of the vane (7).

6. The outer guide vanes (5) according to one of claims 1 to 5, wherein the deviation (δ) of the profile of each vane (7) at the radially inner boundary (10) of the vane (7) is strictly greater than the deviation (δ) of the profile at the tip (11) of the vane (7).

7. The outer guide vanes (5) according to one of claims 1 to 6, wherein a maximum deviation (δₘₐₓ) of the profile of each vane (7) is located at a distance from the radially inner boundary (10) of the vane (7) of between 0% and 40% of the height of the vane (7).

8. The outer guide vanes (5) according to one of claims 1 to 7, wherein the deviation (δ) of the profile of each vane (7) is less than 25° over a portion of the vane (7) extending from the radially inner boundary (10) to a distance of between 40% and 80% of the height of the vane (7).

9. The outer guide vanes (5) according to one of claims 1 to 8, wherein the deviation (δ) of the profile of each vane (7) at the tip (11) of the vane (7) is of between 10° and 25°.

10. The outer guide vanes (5) according to one of claims 1 to 9, wherein the deviation (δ) of the profile of each vane (7) is less than 25° over a portion of the vane (7) extending from a first distance of between 10% and 20% of the height of the vane (7) to a second distance of between 80% and 100% of the height of the vane (7).

11. The outer guide vanes (5) according to one of claims 1 to 5 and 10, wherein the deviation (δ) of the profile of each vane (7) at the tip (11) of the vane (7) is of between 25° and 35°, wherein the deviation (δ) of the profile of each vane (7) can be strictly greater than 20° over the entire height of the vane (7).

12. The outer guide vanes (5) according to one of claims 1 to 7 and 13 to 15, wherein the deviation (δ) of the profile of each vane (7) at the tip (11) of the vane (7) is greater than or equal to the deviation (δ) of the profile at the radially inner boundary (10) of the vane (7).

13. The outer guide vanes (5) according to one of claims 1 to 12, wherein a length of the chord of each vane (7) at the tip (11) of the vane (7) is less than 75% of a maximum chord of the vane (7).

14. An unducted thrust-generating assembly (3) for a turbine engine (1) comprising a propeller (4) rotatable relative to a casing (8) of the turbine engine (1) and outer guide vanes (5) according to one of claims 1 to 13 fixedly mounted on the casing (8) and extending downstream of the propeller (4), wherein the assembly can comprise between 8 and 12 blades et the propeller (4) can comprise between ten and sixteen rotating blades (6).

15. A turbine engine (1) comprising a casing (8) and an unducted thrust-generating assembly (3) according to claim 14, the propeller (4) being rotatable relative to the casing (8) and the outer guide vanes (5) being fixed in rotation relative to the casing (8), downstream of the propeller (4), wherein at least one of the propeller (4) and the outer guide vanes (5) can have a variable pitch.
